# EUROPÄISCHE PATENTANMELDUNG

(11) **EP 3 670 749 A1**
(43) Veröffentlichungstag der Anmeldung: **24.06.2020**
(21) Anmeldenummer: 18215483.1
(22) Anmeldetag: 21.12.2018
(51) Int. Cl.: E01F 9/619, A01M 29/08

(54) **REFLEKTOR SOWIE REFLEKTORSYSTEM**

(71) Anmelder: Swareflex GmbH, 6134 Vomp (AT)
(72) Erfinder: Egger, Peter, 6134 Vomp (AT); Niederstätter, Andreas, 6134 Vomp (AT); Pfurtscheller, Alessandro, 6134 Vomp (AT)
(74) Vertreter: dompatent von Kreisler Selting Werner - Partnerschaft von Patent- und Rechtsanwälten mbB

(57) **Zusammenfassung**

Reflektor zur Anbringung entlang einer Straße oder einem Fahrweg, mit mindestens einem Reflektorelement, wobei das Reflektorelement entlang einer ersten Achse eine erste Anzahl an Spiegelflächen aufweist und entlang einer zweiten Achse eine zweite Anzahl an Spiegelflächen aufweist, wobei die erste Anzahl und/oder die zweite Anzahl größer eins ist und wobei die Spiegelflächen entlang der ersten Achse gewinkelt zueinander sind und/oder die Spiegelflächen entlang der zweiten Achse gewinkelt zueinander sind.

## Beschreibung

Die vorliegende Erfindung betrifft einen Reflektor insbesondere zur Anbringung entlang einer Straße oder einem Fahrweg sowie ein Reflektorsystem mit einem solchen Reflektor.

Es ist bekannt, Reflektoren entlang von Straßen oder Fahrwegen als Orientierungshilfe für die Fahrzeuge anzubringen. Durch das Licht der Fahrzeuge werden die Reflektoren beleuchtet, und das Licht wird durch die Reflektoren an die Fahrer des jeweiligen Fahrzeugs oder andere Verkehrsteilnehmer zurückreflektiert. Hierdurch wird eine erhöhte Sichtbarkeit beispielsweise durch Randmarkierungen, Straßenmarkierungen oder Begrenzungen erreicht.

Insbesondere in ländlichen Regionen besteht bei Dunkelheit eine erhöhte Gefahr, dass aufgrund von Wildwechsel ein Zusammenstoß mit Tieren bzw. Wildtieren erfolgt. Eine zunehmende Zerstückelung des Lebensraums, sowie eine immer weiter steigende Mobilität der Menschen lässt die Wahrscheinlichkeit einer solchen Kollision weiter steigen. Solche Unfälle sind für das betreffende Tier meist tödlich, haben jedoch auch erhebliche Auswirkungen auf die Fahrer der jeweiligen Unfallfahrzeuge und können darüber hinaus weitere Verkehrsteilnehmer in Mitleidenschaft ziehen. Darüber hinaus entsteht ein beachtlicher volkswirtschaftlicher Schaden, welcher beispielsweise durch Behandlungs- und Arbeitsunfähigkeitskosten sowie Schäden an den Fahrzeugen und Einrichtung des Straßenverkehrs herbeigeführt wird.

Es ist bekannt, Wildtiere durch beispielsweise Zäune von der Straße fernzuhalten. Solche Wildzäune sind jedoch sehr teuer in der Anbringung, erfordern eine ständige Wartung, da von den Wildtieren ein solcher Wildzaun als Hindernis empfunden wird und sodann diese versuchen den Wildzaun zu umgehen oder zu durchbrechen. Außerdem ist es nicht an jeder Stelle möglich, einen entsprechenden Wildzaun vorzusehen.

Weiterhin ist es bekannt beispielsweise reflektierende Elemente, welche entlang der Straße angebracht werden und beispielsweise durch Wind oder dergleichen bewegbar sind, vorzusehen. Durch die reflektierenden Elemente erfolgt eine Reflexion des Lichtes der Fahrzeuge in eine sich verändernde Richtung aufgrund der Beweglichkeit der Reflexionselemente. Somit werden Lichtblitze erzeugt, welche von Wildtieren besonders deutlich wahrgenommen werden und dazu geeignet sind, Wildtiere von Straßen fernzuhalten. Hierbei hängt jedoch die Wirksamkeit des Systems davon ab, ob die reflektierenden Elemente sich tatsächlich bewegen. So kann beispielsweise bei Windstille eine solche Bewegung gerade ausbleiben. Weiterhin ist ein solches System stark vom Zufall abhängig, ob ein hierdurch erzeugter Lichtblitz tatsächlich zu dem zu warnenden Wildtier gelangt. Somit ist die Wirksamkeit eines solchen Systems sehr gering und solche Reflektoren können nicht wirksam Wildtiere von Straßen fernhalten. Ebenso kann durch einen solchen Reflektor eine Blendung der Verkehrsteilnehmer verursacht werden.

Aufgabe der vorliegenden Erfindung ist es, einen Reflektor sowie ein Reflektorsystem zu schaffen, mit dem effektiv Wildtiere gewarnt und von Straßen oder Fahrwegen ferngehalten werden können.

Die Aufgabe wird gelöst durch einen Reflektor gemäß Anspruch 1 sowie ein Reflektorsystem gemäß Anspruch 11.

Der erfindungsgemäße Reflektor zur Anbringung entlang einer Straße oder eines Fahrwegs weist mindestens ein Reflektorelement auf. Dabei weist das Reflektorelement entlang einer ersten Achse, eine erste Anzahl an Spiegelflächen auf. Insbesondere sind entlang der ersten Achse mehr als eine Spiegelfläche angeordnet, wobei bei Vorsehen von mehr als einer Spiegelfläche entlang der ersten Achse, die vorgesehenen Spiegelflächen in einem Winkel zueinander angeordnet sind. Zusätzlich hierzu weist das Reflektorelement entlang einer zweiten Achse, welche insbesondere senkrecht zur ersten Achse angeordnet ist, eine zweite Anzahl an Spiegelflächen auf. Insbesondere ist die Anzahl an der zweiten Spiegelfläche gleich oder größer eins, wobei bei Vorsehen von mehr als einer Spiegelfläche die Spiegelflächen entlang der zweiten Achse gewinkelt zueinander angeordnet sind. Somit weist das Reflektorelement entlang der ersten Achse und/oder entlang der zweiten Achse mehr als eine Spiegelfläche auf, wobei dann die Spiegelflächen zueinander gewinkelt sind. Durch das Vorsehen der Spiegelflächen entlang der jeweiligen Achsen, welche gewinkelt zueinander angeordnet sind, erfolgt eine Reflexion des einfallenden Lichtes des jeweiligen Fahrzeugs in unterschiedliche Winkelbereiche, welche aufgrund der gewinkelten Anordnung der unterschiedlichen Spiegelflächen getrennt voneinander sind oder zumindest unterschiedlich sind, wobei eine Überlappung der Winkelbereiche möglich ist. Da sich jedoch das Fahrzeug bewegt, bewegt sich auch der Winkelbereich, in dem das Licht des Fahrzeugs reflektiert wird. Somit wird aufgrund der Mehrzahl der vorgesehenen Spiegelflächen ein großer Bereich abgedeckt, in dem Lichtreflexionen als Lichtblitze erzeugt werden, um somit effektiv Wildtiere oder Tiere vor der Straße zu warnen. Pro Spiegelfläche wird somit Licht reflektiert, so dass bei Vorsehen einer Mehrzahl von Spiegelflächen eine entsprechende Mehrzahl von Reflexionen erzeugt werden, welche sodann von dem Wildtier als Lichtblitze und somit abschreckend wahrgenommen werden.

Die erste Anzahl und die zweite Anzahl der Spiegelflächen können gleich oder unterschiedlich sein. Insbesondere beträgt die erste Anzahl 2, 3, 4, 5 usw. bis zu 15 Spiegelflächen oder mehr. Alternativ oder zusätzlich hierzu beträgt die zweite Anzahl 2, 3, 4, 5 usw. bis zu 15 Spiegelflächen oder mehr. Durch die große Anzahl an vorgesehenen Spiegelflächen werden eine Vielzahl von Reflexionen erzeugt, welche effektiv Wildtiere abschrecken können.

Vorzugsweise ist mindestens eine, bzw., sind mehrere oder alle der vorgesehenen Spiegelflächen eben, also als planare Spiegelfläche ausgebildet. Alternativ oder zusätzlich hierzu ist mindestens eine, bzw., sind mehrere oder alle Spiegelflächen gekrümmt ausgebildet, wobei es sich bei der Krümmung um insbesondere einen Kreisausschnitt bzw. ein Kreissegment, eine parabelförmige Krümmung oder ein Paraboloid bzw. Paraboloidsegment handeln kann.

Vorzugsweise weist der Reflektor mehrere Reflektorelemente auf, welche besonders bevorzugt identisch ausgebildet sind.

Vorzugsweise sind die Spiegelflächen eines Reflektorelements entlang der ersten Achse auf einem Polygonzug angeordnet. Hierbei werden die Ecken des Polygonzuges gebildet durch die Verbindungsecken der jeweiligen Spiegelflächen, also der Verbindungsstelle zwischen einer ersten Spiegelfläche und einer unmittelbar benachbarten Spiegelfläche. Handelt es sich bei den Spiegelflächen um gekrümmte Spiegelflächen, so liegen zumindest die Ecken, mit denen die jeweiligen Spiegelflächen miteinander verbunden sind, auf dem Polygonzug. Alternativ oder zusätzlich hierzu sind die Spiegelflächen entlang der zweiten Achse auf einem Polygonzug angeordnet.

Vorzugsweise weist der Polygonzug eine gekrümmte Form auf, wobei die Richtung der Krümmung entlang der ersten Achse und/oder entlang der zweiten Achse innerhalb eines Reflektorelements gleichbleibt. Somit folgt die Anordnung der Spiegelflächen entlang der ersten Achse und/oder entlang der zweiten Achse im Wesentlichen entlang einem Kreis oder Kreissegment, wobei jedoch selbstverständlich einzelne, mehrere oder eine Vielzahl von Spiegelflächen hiervon abweichen können.

Vorzugsweise ist ein Winkel α₁ zwischen zwei zueinander benachbarten Spiegelflächen entlang der ersten Achse und/oder ein Winkel α₂ entlang der zweiten Achse vorgesehen bei Vorsehen von mehr als einer Spiegelfläche entlang der ersten und/oder zweiten Achse, wobei insbesondere der Winkel innerhalb eines Reflektorelements entlang der ersten Achse und/oder entlang der zweiten Achse für alle Spiegelflächen identisch ist. So weist bei Vorsehen von drei Spiegelflächen entlang einer der ersten Achse oder der zweiten Achse eine erste Spiegelfläche zu einer zweiten Spiegelfläche einen Winkel α₁ bzw. α₂ auf. Ebenso weist die zweite Spiegelfläche zu einer dritten Spiegelfläche wiederum den Winkel α₁ bzw. α₂ auf. Somit ergibt sich unweigerlich, dass die erste Spiegelfläche gegenüber der dritten Spiegelfläche einen Winkel von 2α₁ bzw. 2α₂ aufweist. α₁ oder α₂ können dabei gleich oder auch verschieden sein.

Vorzugsweise liegt der Winkel α₁ in einem Bereich zwischen mehr als 0° und weniger als 90°, insbesondere beträgt der Winkel α₁ weniger als 45°, insbesondere liegt der Winkel α₁ in einem Bereich zwischen mehr als 0° und 20°. Insbesondere liegt der Winkel α₁ in einem Bereich zwischen mehr als 0° und 10°, bevorzugt zwischen 1° und 5° und besonders bevorzugt zwischen 2° und 4,5°.

Vorzugsweise liegt der Winkel α₂ in einem Bereich zwischen mehr als 0° und weniger als 90°, insbesondere beträgt der Winkel α₂ weniger als 45°, insbesondere liegt der Winkel α₂ in einem Bereich zwischen mehr als 0° und 20°. Insbesondere liegt der Winkel α₂ in einem Bereich zwischen mehr als 0° und 10°, bevorzugt zwischen 1° und 5° und besonders bevorzugt zwischen 2° und 4,5°.

Vorzugsweise weist der Reflektor entlang der Vertikalen im montierten Zustand eine symmetrische Reflexion auf mit einer symmetrischen Winkelverteilung um die Horizontale. Alternativ hierzu weist der Reflektor entlang der Vertikalen im montierten Zustand eine asymmetrische Reflexion auf mit einer asymmetrischen Winkelverteilung um die Horizontale. Besonders bevorzugt liegt die Reflexion in einem Bereich von -20° zur Horizontelen bis 50° zur Horizontalen und insbesondere -5° zur Horizontalen bis 20° zur Horizontalen. Dabei liegt der positive Winkelbereich über der Horizontalen und der negative Winkelbereich unter der Horizontalen. Durch den gewählten Winkelbereich kann die Abstrahlcharakteristik des Reflektors an die jeweiligen örtlichen Gegebenheiten angepasst werden insbesondere um eine Blendung von Verkehrsteilnehmern zu verhindern.

Vorzugsweise weist der Reflektor entlang der Horizontalen im montierten Zustand eine asymmetrische Reflexion auf mit einer asymmetrischen Winkelverteilung um die Vertikale. Alternativ hierzu weist der Reflektor entlang der Horizontalen im montierten Zustand eine symmetrische Reflexion auf mit einer symmetrischen Winkelverteilung um die Vertikale.

Vorzugsweise sind entlang der ersten Achse eine Vielzahl von Reflektorelementen nebeneinander angeordnet, welche insbesondere eben miteinander verbunden sind. Dabei liegen die Verbindungspunkte zwischen zwei Reflektorelementen bzw. die beiden äußeren Eckpunkte der beiden Reflektorelemente, gebildet durch die äußeren Ecken der jeweiligen äußersten Spiegelflächen, auf einer gemeinsamen Ebene entlang der ersten Achse.

Vorzugsweise ist entlang der ersten Achse eine Vielzahl von Reflektorelementen nebeneinander angeordnet, wobei die jeweiligen Verbindungslinien zwischen den beiden äußersten Ecken des jeweiligen Reflektorelements parallel zueinander sind und nicht in einer Ebene liegen. Somit weisen die benachbarten Reflektorelemente entlang der ersten Achse zueinander einen Winkel auf und/oder sind um einen vorgegebenen gemeinsamen Winkel gedreht. Hierdurch lässt sich auf einfache Weise die Abstrahlcharakteristik des Reflektors entlang der vertikalen Achse anpassen.

Vorzugsweise sind entlang der zweiten Achse, eine Vielzahl von Reflektorelementen angeordnet, wobei insbesondere benachbarten Reflektorelemente zueinander ein Winkel β aufweisen. Somit weist eine Verbindungslinie der äußersten Eckpunkte eines ersten Reflektorelements gebildet durch die äußersten Ecken der jeweils äußersten Spiegelflächen des ersten Reflektorelements ein Winkel β zu der Verbindungslinie zwischen den äußersten Eckpunkten des unmittelbar benachbarten Reflektorelements auf. Durch Vorsehen des Winkels β wird sichergestellt, dass die Reflexionen der einzelnen Reflektorelemente in unterschiedliche Winkelbereiche erfolgen und somit eine große Abdeckung der Winkelbereiche gewährleistet ist.

Vorzugsweise alterniert das Vorzeichen des Winkels β entlang der zweiten Achse. Sind beispielsweise entlang der zweiten Achse drei Reflektorelemente angeordnet, so weist das erste Reflektorelement zum zweiten Reflektorelement einen Winkel von β auf, wohingegen das zweite Reflektorelement gegenüber dem dritten Reflektorelement einen Winkel von -β aufweist. Wäre ein weiteres Reflektorelement vorgesehen, würde dieses wiederum den Winkel β aufweisen, gefolgt von dem Winkel -β und so weiter. Hierdurch wird sichergestellt, dass die Reflexion durch unterschiedliche Reflektorelemente erfolgt.

Vorzugsweise gilt β=α₂/2. Somit beträgt der Winkel zwischen zwei benachbarten Reflektorelementen entlang der zweiten Achse gerade die Hälfte des vorgesehenen Winkels zwischen den jeweiligen Spiegelflächen eines jeweiligen Reflektorelements. Insbesondere beträgt der Winkel β=α₂/2±1°, bevorzugt β=α₂/2±0,5°. Hierdurch wird sichergestellt, dass im Reflexionsbild zwischen zwei Reflexionen, welche durch ein erstes Reflektorelement erzeugt werden genau eine Reflexion eines benachbarten Reflektorelements vorliegt. Hierdurch wird ein vollständiger Winkelbereich übergedeckt, wobei Reflexionen abwechselnd erzeugt werden durch benachbarte Reflektorelemente.

Vorzugsweise bilden Reflektorelemente entlang der ersten Achse einen Streifen. Dabei weist insbesondere der Reflektor so viele Streifen auf, wie Reflektorelemente entlang der zweiten Achse. Insbesondere weisen zwei benachbarte Streifen unterschiedliche Farben und/oder unterschiedliche Reflektivität auf. Besonders bevorzugt handelt es sich hierbei bei einer Farbe um weiß, so dass eine maximale Helligkeit erzeugt wird, sowie blau, da die Rezeption von Blau durch Wildtiere besonders effektiv erfolgt, so dass ein deutliches Abschrecken der Wildtiere durch eine blaue Reflexion erfolgen kann. Entlang der zweiten Achse weisen beispielsweise die Streifen abwechselnd die Farbe Weiß, Blau, Weiß, Blau, Weiß,... usw. auf. Insbesondere bei Vorsehen eines Winkels zwischen den einzelnen Reflektorelementen werden somit abwechselnd weiße, blaue, weiße, blaue, weiße,... usw. Reflexionen erzeugt, welche vom Wildtier als besonders deutlich und somit warnend empfunden werden. Hierdurch kann effizient ein Wildtier abgeschreckt werden.

Vorzugsweise ist der Reflektor hergestellt aus Kunststoff. Alternativ oder zusätzlich hierzu ist der Reflektor einstückig ausgebildet. Hierdurch wird ein besonders einfacher und damit kostengünstiger Aufbau gewährleistet.

Weiterhin betrifft die Erfindung ein Reflektorsystem mit einem Gehäuse und mindestens einem und insbesondere zwei Reflektoren wie vorstehend beschrieben.

Vorzugsweise besteht das Reflektorsystem ausschließlich aus einem oder zwei Reflektoren einer oder einer entsprechenden Anzahl an Blenden und einem insbesondere einteilig ausgebildetem Gehäuse. Hierdurch ist ein besonders einfacher Aufbau des Reflektorsystems gewährleistet, welcher insbesondere kostengünstig realisiert werden kann.

Vorzugsweise sind die jeweiligen Blenden einstückig ausgebildet, so dass die Anzahl der Bauteile weiter reduziert wird.

Vorzugsweise weist das Gehäuse einen im Wesentlichen dreieckigen Querschnitt auf. Durch den im Wesentlichen dreieckigen Querschnitt können die Reflektoren an den gewinkelten Flächen des Dreiecks angebracht werden und somit einen Winkel gegenüber der Grundfläche des dreieckigen Gehäuses aufweisen. Dabei wird die Grundfläche genutzt zur Befestigung beispielsweise an einer Leitplanke einer Betonleitplanke, einem Warnpfosten, einem Leitpfosten oder einem sonstigen Pfosten entlang der Straße. Insbesondere weist der Querschnitt die Form eines gleichschenkligen Dreiecks auf, wobei die Reflektoren an den gleichen Seiten des Dreiecks angeordnet sind. Bevorzugt beträgt der Winkel an der Spitze des gleichschenkligen Dreiecks zwischen 30° und 60° und besonders bevorzugt 45°.

Vorzugsweise ist das Gehäuse an den Längsenden abgeschrägt ausgebildet. Im montierten Zustand weisen diese Längsenden nach oben und unten. Insbesondere durch die Abschrägung des oberen Längsendes bildet sich kein Schnee auf dem Reflektorsystem, welcher zur Verdeckung des Reflektorsystems führen könnte. Aufgrund der Abschrägung rutscht der aufliegende Schnee ab, wodurch die Reflektoren des Reflektorsystems stets gut sichtbar bleiben.

Vorzugsweise ist das Reflektorsystem ausschließlich aus Kunststoff hergestellt.

Anliegend wird die vorliegende Erfindung anhand bevorzugter Ausführungsformen unter Bezugnahme auf die beigefügten Zeichnungen näher erläutert.

Es zeigen:
- Fig. 1: ein Reflektor gemäß der vorliegenden Erfindung,
- Fig. 2a: eine Schnittansicht entlang der ersten Achse des Reflektors einer ersten Ausführungsform,
- Fig. 2b: eine Schnittansicht entlang der ersten Achse des Reflektors einer zweiten Ausführungsform,
- Fig. 3: eine weitere Schnittansicht des Reflektors der Figur 1 und
- Fig. 4: ein Reflexionsbild erzeugt durch zwei Reflektorelemente,
- Fig. 5: eine perspektivische Darstellung des Reflektorsystems,
- Fig. 6: eine Schnittansicht des Reflektorsystems der Figur 5 und
- Fig. 7: eine Seitenansicht des Reflektors mit schematischer Darstellung der Abstrahlverteilung.

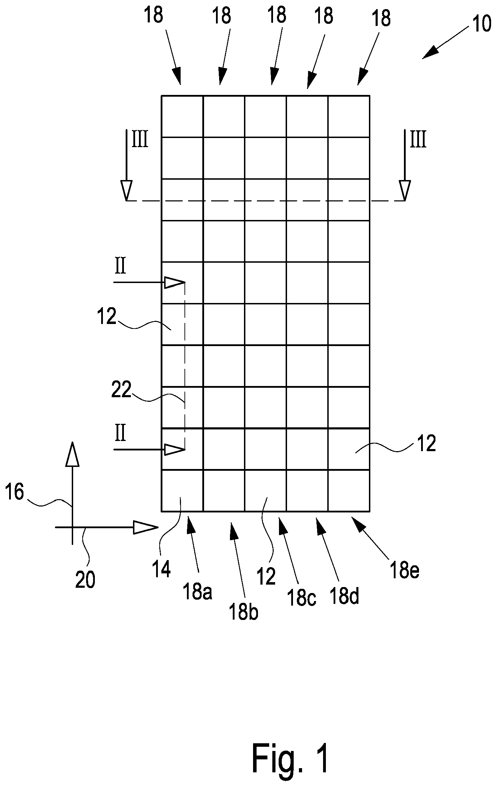

Figur 1 zeigt einen erfindungsgemäßen Reflektor 10 mit einer Vielzahl von Reflektorelementen 12. Dabei ist ausgehend von einem ersten Reflektorelement 14 entlang einer ersten Achse 16 eine Vielzahl weiterer Reflektorelemente 12 in einem ersten Streifen 18a angeordnet. Weiterhin ist ausgehend von dem ersten Reflektorelement 14 entlang einer zweiten Achse 20 eine Vielzahl weiterer Reflektorelemente 12 angeordnet, wobei durch jedes der Reflektorelemente 12, welche entlang der zweiten Achse 20 angeordnet sind, ein weiterer Streifen 18 gebildet wird. Somit besteht das Reflektorelement dargestellt in der Figur 1 aus fünf Streifen 18. Einzelne und insbesondere benachbarte Streifen 18 können dabei unterschiedliche Farbe aufweisen. So kann ein erster Streifen 18a weiße Farbe aufweisen bzw. klar ausgebildet sein, so dass weißes Licht als weißes Licht reflektiert wird. Eine unmittelbare danebenliegende Streifen 18b kann dabei blau sein. Die blaue Farbe wird von Wildtieren besonders gut gesehen, so dass eine deutliche Signalwirkung für Wildtiere und Tiere erreicht wird. Ein dritter Streifen 18c kann sodann wiederum weiß oder eine andere Farbe aufweisen. Insbesondere sind die vorgesehenen Farben weiß und blau abwechselnd vorgesehen, so dass ein vierter Streifen 18d wiederum blau und ein fünfter Streifen 18e wiederum weiß ausgebildet ist.

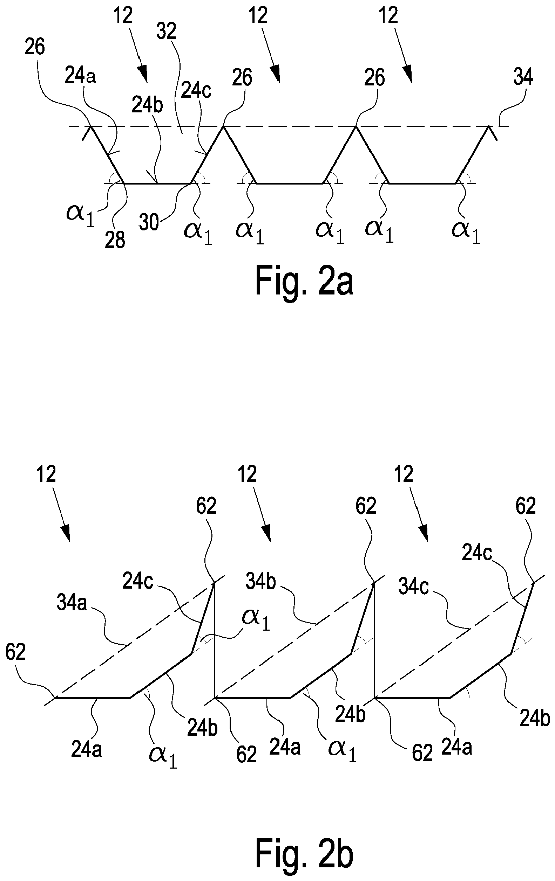

Figur 2a zeigt die Schnittansicht entlang dem Schnitt 22 durch drei Reflektorelemente 12. Die Reflektorelemente 12 sind dabei identisch ausgebildet und weisen eine erste Spiegelfläche 24a, eine zweite Spiegelfläche 24b und eine dritte Spiegelfläche 24c auf. Dabei sind die Spiegelflächen 24a, 24b, 24c planar ausgebildet bzw. als ebene Spiegelfläche ausgebildet. Zwischen der ersten Spiegelfläche 24a und der zweiten Spiegelfläche 24b ist ein Winkel α₁ vorgesehen. Dieser wird insbesondere als Außenwinkel gemessen, so dass α₁ stets kleiner 90 Grad ist. Insbesondere liegt der Winkel α₁ in einem Bereich von mehr als 0° und 10°, bevorzugt zwischen 1° und 5° und besonders bevorzugt zwischen 2° und 4,5°. Ebenso ist zwischen der zweiten Spiegelfläche 24b und der dritten Spiegelfläche 24c ein Winkel vorgesehen, welcher insbesondere ebenfalls α₁ entspricht. Der zweite Winkel zwischen der zweiten Spiegelfläche 24b und der dritten Spiegelfläche 24c kann jedoch auch von dem Winkel α₁ zwischen der ersten Spiegelfläche 24a und der zweiten Spiegelfläche 24b abweichen, ist jedoch im vorliegenden Beispiel identisch gewählt. Derselbe Winkel α₁ ist für die weiteren Reflektorelemente 12 vorgesehen. Dabei liegen die Eckpunkte 26 sowie die erste Verbindungspunkte 28 zwischen der ersten Spiegelfläche 24a und der zweiten Spiegelfläche 24b und der zweite Verbindungspunkt 30 zwischen der zweiten Spiegelfläche 24b und der dritten Spiegelfläche 24c eines jeweiligen Reflektorelements 12 auf einem Polygonzug, wobei die Krümmung dieses Polygonzuges stets gleich bleibt, so dass durch die Spiegelflächen 24 eine Ausnehmung 32 gebildet wird.

Weiterhin liegen die äußeren Eckpunkte 26 der jeweiligen Reflektorelemente 12 an denen ein Reflektorelement 12 mit dem unmittelbar benachbarten Reflektorelement 12 verbunden ist auf einer gemeinsamen Linie 34. Insbesondere ist kein Winkel zwischen den einzelnen Reflektorelementen 12 entlang der ersten Achse 16 vorgesehen. Selbstverständlich kann sofern die Anwendung dies erfordert ein solcher Winkel vorgesehen sein.

Alternativ zu der Ausführungsform gezeigt in der Fig. 2a ist in der Fig. 2b ein entsprechender Schnitt bei einer zweiten Ausführungsform entlang der ersten Achse dargestellt. Wiederrum sind drei Spiegelflächen 24a, 24b, 24c pro Reflektorelement vorgesehen. Diese weisen analog zu der Ausführungsform der Fig. 2a zueinander einen gleichbleibenden Winkel α₁ auf. Jedoch sind die einzelnen Reflektorelemente 12 um einen gemeinsamen Winkel zueinander verdreht. Eine Verbindungslinie 34a eines ersten Reflektorelements 12, definiert durch die äußersten Eckpunkte 62 des jeweiligen Reflektorelements 12, ist parallel zu einer analog definierten Verbindungslinie 34b bzw. 34c weiterer Reflektorelemente desselben Streifens 18. Hierdurch wird eine sägezahnförmige Anordnung der einzelnen Spiegelflächen erreicht. Durch diese Anordnung der einzelnen Reflektorelemente wird auf einfache Weise eine asymmetrische Abstrahlcharakteristik entlang der ersten Achse erreicht.

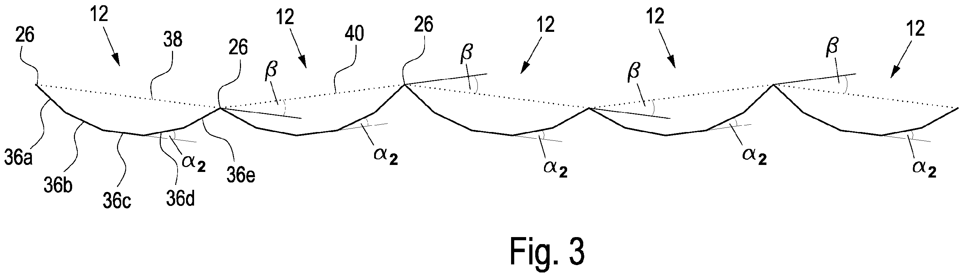

Figur 3 zeigt eine Schnittansicht entlang der zweiten Achse 20. Figur 3 zeigt dabei fünf Reflektorelemente 12, wobei benachbarte Reflektorelemente 12 in der Figur 3 unterschiedliche Farben aufweisen. Weiterhin sind die Reflektorelemente 12 entlang der zweiten Achse 20 ebenfalls identisch ausgebildet. So weisen die Reflektorelemente 12 im dargestellten Beispiel entlang der zweiten Achse 20 fünf Spiegelflächen, 36a bis 36e auf. Diese Spiegelflächen 36 sind dabei zu den unmittelbar benachbarten Spiegelflächen um einen Winkel α₂ gewinkelt angeordnet. Insbesondere kann der Winkel α₁ der Spiegelflächen-Anordnung entlang der ersten Achse identisch sein zu dem Winkel α₂ der Spiegelflächen-Anordnung entlang der zweiten Achse 20. Insbesondere ist ein unterschiedlicher Winkel gewählt. Insbesondere handelt es sich bei der mittleren Spiegelfläche 36c um dieselbe Spiegelfläche, welche in der Figur 2a als mittlere Spiegelfläche 24b bzw. zweite Spiegelfläche 24b dargestellt ist. Alternativ hierzu muss es sich auch nicht um die mittlere Spiegelfläche 24b handeln. So ist in der Fig. 2b die jeweils erste Spiegelfläche 24a als gemeinsame Spiegelfläche gewählt. Die Spiegelflächen 36 entlang der zweiten Achse 20 sind wiederum entlang eines Polygonzugs gebildet, welcher entlang des jeweiligen Reflektorelements eine gleichbleibende Krümmung aufweist.

Weiterhin sind benachbarte Reflektorelemente entlang der zweiten Achse 20 zueinander gewinkelt angeordnet. Hierzu ist ein Winkel vorgesehen zwischen der Verbindungslinie eines ersten Reflektorelements 12, welcher durch die äußeren Eckpunkte 26 des ersten Reflektorelemente 12 definiert wird, und der Verbindungslinie eines unmittelbar benachbarten zweiten Reflektorelemente 12, welcher ebenfalls durch die äußeren Eckpunkte 26 des zweiten Reflektorelements definiert ist. Somit weist eine erste Verbindungslinie 38 einen Winkel β auf gegenüber einer zweiten Verbindungslinie 40 des benachbarten Reflektorelements 12. Dabei beträgt der Winkel β insbesondere α₂/2. Ein drittes Reflektorelement 12, welches zu dem dritten Streifen 18c gehört weist gegenüber dem Reflektorelement 12, welches zum zweiten Streifen 18b gehört, wiederum einen Winkel β auf, jedoch in entgegen gesetzter Richtung. Somit ist ein sich abwechselnder Winkel β, -β, β, -β usw. zwischen den einzelnen Reflektorelementen 12 der jeweiligen Streifen vorgesehen.

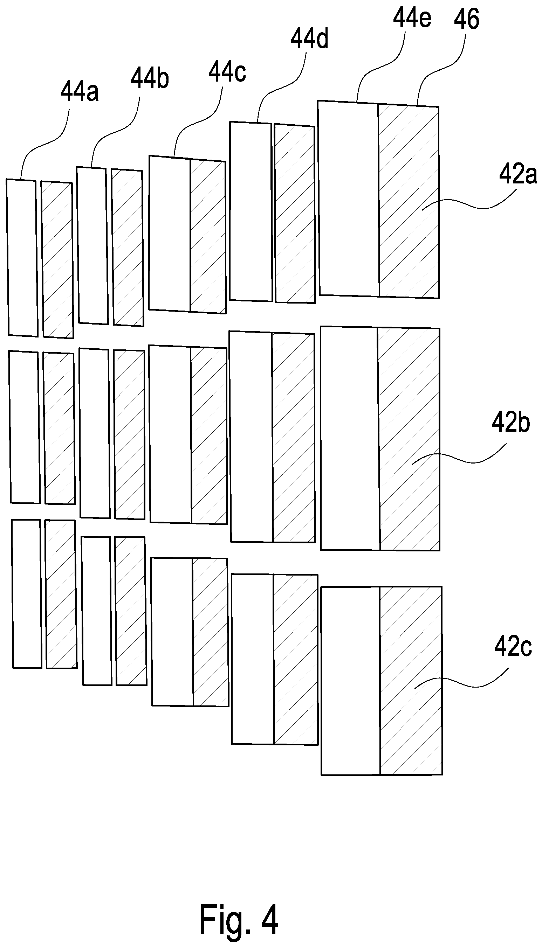

Figur 4 zeigt das Reflexionsbild zweier benachbarter Reflektorelemente, wobei die Reflektorelemente entlang der zweiten Achse angeordnet sind. So werden durch die Reflektorelemente aufgrund der drei Spiegelflächen 24a, 24b, 24c drei Reflexionsstreifen 42a, 42b und 42c ausgebildet. Aufgrund des Vorsehens der fünf Spiegelflächen 36 entlang der zweiten Achse 20 entstehen pro Reflektorelement 12 und pro Reflexionsstreifen 40 jeweils fünf Reflexionen 44a ... 44e. Die zu den Reflexionen 44 unmittelbar benachbarten Reflexionen 46 stammen dabei vom benachbarten Reflektorelement 12 und weisen daher eine blaue Farbe auf. Aufgrund des Vorsehens des Winkels β=α₂/2 entsteht zwischen den Reflexionen erzeugt durch benachbarte Spiegelflächen ein- und desselben Reflektorelements 12 im Reflexionsbild der Figur 4 unmittelbar eine Reflexion erzeugt durch eine Spiegelfläche des benachbarten Reflektorelements, so dass sich die Farbe der Reflexionen abwechseln, je nachdem durch welches Reflektorelement die jeweilige Reflexion erzeugt wird. Somit wird das Licht bei einem vorbeifahrenden Fahrzeug für einen Betrachter abwechselnd von zwei benachbarten Reflektorelementen mit unterschiedlicher Farbe reflektiert, wodurch ein Blinken in zwei unterschiedlichen Farben erzeugt wird, welches ein deutlich und abschreckendes Warnfunktion für Tiere und Wildtiere aufweist.

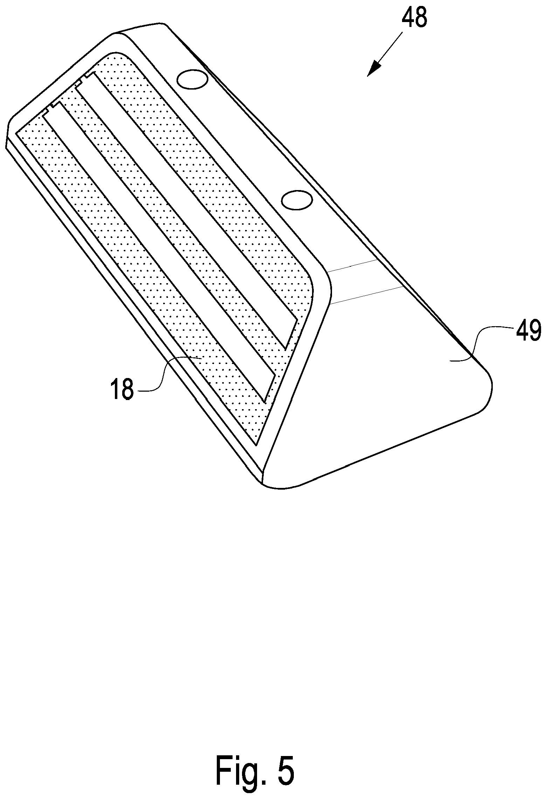

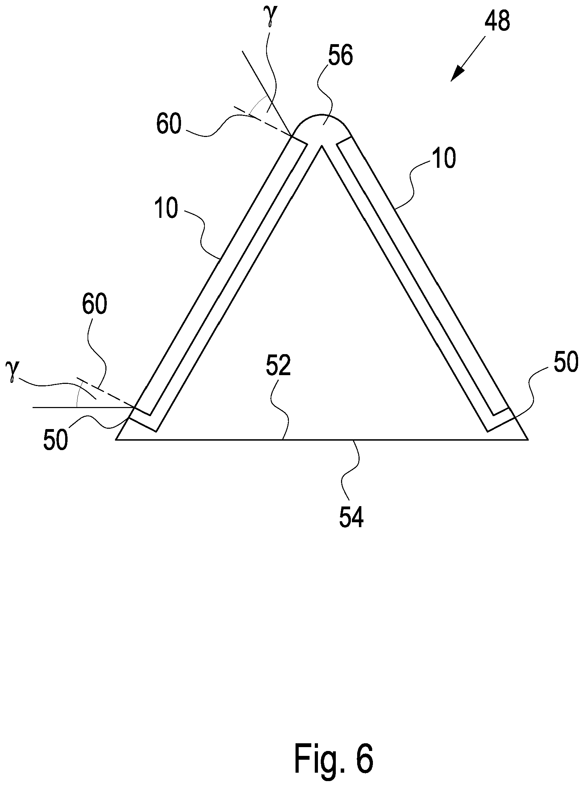

Figur 5 zeigt eine perspektivische Darstellung des Reflektorsystems. Aus der Schnittansicht der Figur 6 ist ersichtlich, dass das Reflektorsystem 48 eine im Wesentlichen dreieckigen Querschnitt aufweist, wobei an zwei Flächen 50 die Reflektoren 10 wie vorstehend beschrieben angeordnet sind und in einem Winkel zueinander stehen. Die Grundseite 52 des Reflektorsystems 48 ist dabei ausgebildet, um mit einem Leitpfosten, Pfosten, Leitplanke, Betonleitplanke oder einer anderen ortsfesten Struktur entlang der Straße angeordnet zu werden. Dabei besteht das Reflektorsystem 48 ausschließlich aus dem Gehäuse 54 den beiden Reflektoren 10 und einer oder einer Anzahl der Reflektoren 10 entsprechender Anzahl an Blenden 56. Im Beispiel der Figur 6 ist lediglich eine gemeinsame Blende 56 vorgesehen. Hierdurch vereinfacht sich der Aufbau. Im montierten Zustand weisen somit die einzelnen Streifen der Reflektoren 10 in eine vertikale Richtung. Eine horizontale Richtung ist selbstverständlich auch möglich. Die obere Endfläche 49 des Reflektorsystems 48 ist dabei abgeschrägt ausgebildet, so dass Schnee und Wasser einfach ablaufen kann, so dass eine Verschmutzung oder Verdeckung des Reflektorsystems 48 verhindert wird.

Weiterhin ist in Fig. 6 die Abstrahlcharakteristik des Reflektors 10 dargestellt. Entlang der Horizontalen weist der Reflektor insbesondere eine symmetrische Winkelverteilung auf. So ist ein Winkel γ definiert zwischen einer Vertikalen (Ebene) 60, die senkrecht auf der Oberfläche des Reflektors steht, und der äußersten Reflexion des jeweiligen Reflektors 10. Der Winkel γ kann unterschiedlich gewählt werden, ist jedoch im vorliegenden Beispiel auf beiden Seiten gleich groß.

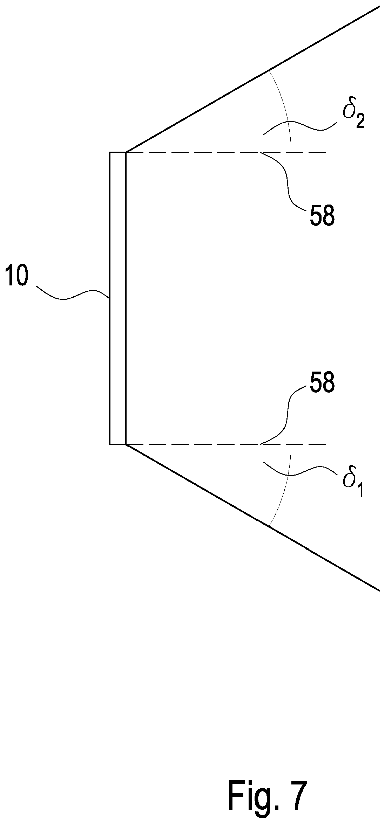

Figur 7 zeigt den Reflektor 10 in Seitenansicht mit der Abstrahlcharakteristik entlang einer vertikalen Achse. Dabei wird ein Winkel δ definiert zwischen einer Horizontalen (Ebene), die senkrecht auf der Oberfläche des Reflektors 10 steht, und der äußersten Reflexion des jeweiligen Reflektorelements. Dabei erstreckt sich der Winkelbereich im vorliegenden Beispiel von -5° bis 25°, so dass δ₁ und δ₂ unterschiedlich gewählt werden können. Dabei erstrecken sich der negative Winkelbereich unterhalb der Horizontelen 58 und der positive Winkelbereich oberhalb der Horizontalen 58. Die asymmetrische Winkelverteilung wird erzeugt durch die zueinander gewinkelte Anordnung der Reflektorelemente entlang der ersten Achse wie beispielsweise in Fig. 2b gezeigt.

## Patentansprüche

1. Reflektor zur Anbringung entlang einer Straße oder einem Fahrweg, mit
mindestens einem Reflektorelement, wobei das Reflektorelement entlang einer ersten Achse eine erste Anzahl an Spiegelflächen aufweist und entlang einer zweiten Achse eine zweite Anzahl an Spiegelflächen aufweist,
wobei die erste Anzahl und/oder die zweite Anzahl größer eins ist und wobei die Spiegelflächen entlang der ersten Achse gewinkelt zueinander sind und/oder die Spiegelflächen entlang der zweiten Achse gewinkelt zueinander sind.

2. Reflektor nach Anspruch 1, **dadurch gekennzeichnet, dass** die erste Anzahl und zweite Anzahl gleich oder unterschiedlich und insbesondere die erste Anzahl und/oder die zweite Anzahl zwischen 2 und 15 Spiegelflächen aufweist.

3. Reflektor nach Anspruch 1 oder 2, **dadurch gekennzeichnet, dass** die Spiegelflächen eben oder gekrümmt ausgebildet sind.

4. Reflektor nach einem der Ansprüche 1 bis 3, **dadurch gekennzeichnet, dass** alle Reflektorelemente identisch ausgebildet sind.

5. Reflektor nach einem der Ansprüche 1 bis 4, **dadurch gekennzeichnet, dass** die Spiegelflächen entlang der ersten Achse und/oder der zweiten Achse entlang einem Polygonzug angeordnet sind.

6. Reflektor nach einem der Ansprüche 1 bis 5, **dadurch gekennzeichnet, dass** zueinander benachbarte Spiegelflächen entlang der zweiten Achse einen Winkel von α₂ aufweisen, wobei insbesondere α₂ im Bereich von mehr als 0° bis 45°, bevorzugt zwischen 1° und 5° und besonders bevorzugt zwischen 2° und 4,5° liegt.

7. Reflektor nach einem der Ansprüche 1 bis 6, **dadurch gekennzeichnet, dass** entlang der ersten Achse eine Vielzahl von Reflektorelementen nebeneinander angeordnet sind, welche insbesondere eben miteinander verbunden sind.

8. Reflektor nach einem der Ansprüche 1 bis 7, **dadurch gekennzeichnet, dass** entlang der zweiten Achse eine Vielzahl von Reflektorelementen angeordnet sind, wobei insbesondere benachbarte Reflektorelemente zueinander einen Winkel β aufweisen

9. Reflektor nach Anspruch 8, **dadurch gekennzeichnet, dass** gilt β = α₂/2±1°, insbesondere β = α₂/2±0.5° und bevorzugt im Wesentlichen β = α₂/2.

10. Reflektor nach einem der Ansprüche 1 bis 9, **dadurch gekennzeichnet, dass** Reflektorelemente entlang der ersten Achse einen Streifen bilden, wobei zwei benachbarte Streifen unterschiedliche Farben und/oder unterschiedliche Reflektivität aufweisen.

11. Reflektorsystem mit einem Gehäuse und mindestens einem und insbesondere zwei Reflektoren nach einem der Ansprüche 1 bis 10.

12. Reflektorsystem nach Anspruch 11, **dadurch gekennzeichnet, dass** das Reflektorsystem ausschließlich aus dem oder den Reflektoren, genau einer oder einer entsprechenden Anzahl an Blenden und dem Gehäuse besteht.

13. Reflektorsystem nach Anspruch 11 oder 12, **dadurch gekennzeichnet, dass** das Gehäuse einen im wesentlichen dreieckigen Querschnitt aufweist.
